# EUROPEAN PATENT SPECIFICATION

(11) **EP 2 652 059 B1**
(45) Date of publication and mention of the grant of the patent: **04.12.2024**
(21) Application number: 11811183.0
(22) Date of filing: 14.12.2011
(51) Int. Cl.: C09J 9/02, H01B 1/22, H01B 1/24

(54) **METHOD FOR FORMING UV-CURABLE CONDUCTIVE COMPOSITIONS AND A COMPOSITION THUS FORMED**
VERFAHREN ZUR HERSTELLUNG VON UV-HÄRTBAREN LEITFÄHIGEN ZUSAMMENSETZUNGEN UND AUF DIESE WEISE HERGESTELLTE ZUSAMMENSETZUNG
PROCÉDÉ DE PRODUCTION DE COMPOSITIONS CONDUCTRICES POLYMÉRISABLES AUX UV ET COMPOSITION AINSI OBTENUE

(30) Priority: 15.12.2010 NO 20101761
(43) Date of publication of application: 23.10.2013
(73) Proprietor: Condalign AS, 2027 Kjeller (NO)
(72) Inventor: KNAAPILA, Matti, 1482 Nittedal (NO); BUCHANAN, Mark, N-0567 Oslo (NO); HELGESEN, Geir, N-1475 Finstadjordet (NO)
(74) Representative: Dehns
(86) International application number: PCT/NO2011/000345
(87) International publication number: WO 2012/081992

(56) References cited:
- WO-A1-2010/151141
- WO-A1-2010/151148
- US-A- 5 769 996
- US-A- 5 932 339
- US-A1- 2007 035 808
- US-A1- 2009 038 832

## Description

The present invention concerns a method for producing a polymer composition with the ability to be cured by UV light to an anisotropic electrically conductive polymer layer and a method for its subsequent use. This polymer can be, but need not be, adhesive in nature.

### Background

UV curing of polymers and polymer systems is generally beneficial because
1. it allows ultimate control of shelf life and pot life
2. it is fast
3. it can be applied where heat would cause damages

UV curing is widely used in the area of polymers and in particular adhesive polymers. Conductive polymer composites and adhesives are materials that comprise a polymer matrix and conductive fillers that make the material conductive. The particle fraction needs to be so high that the conductive particles form pathways through the material. Typically this means tens of volume percentages.

It is however difficult to prepare industrially useful UV curable conductive polymer composites since high fraction of conductive particles absorb incoming UV light, which makes the curing inefficient. Material with high particle fraction has stronger tendency to the segregation of particles and matrix than material with low particle fraction. Segregation limits the storage time of material. Segregated material may not be used or requires careful and inconvenient mixing procedures before the use.

US patent No. 5 932 339 describes an an anisotropically electricity-conductive film obtainable by dispersing in an adhesive agent electrically conductive particles, the adhesive agent being a curable adhesive agent comprising as a major component at least one polymer selected from the group consisting of an ethylene-vinyl acetate copolymer; a copolymer of ethylene, vinyl acetate and an acrylate and/or methacrylate monomer; a copolymer of ethylene, vinyl acetate and maleic acid and/or maleic anhydride; a copolymer of ethylene, an acrylate and/or methacrylate monomer and maleic acid and/or maleic anhydride; and an ionomer resin wherein molecules of an ethylene-methacrylic acid copolymer are linked with each other through a metal ion. It is mentioned that the film may be made UV curable.

US patent No. 5 769 996 concerns compositions and methods for providing anisotropic conductive pathways between two sets of conductors which comprises forming said pathways with a plurality of electrically conductive particles having substantially uniform sizes and shapes, said electrically conductive particles having been arrayed in a regular pattern by application of a substantially uniform magnetic field.

US patent No. 5 328 087 concerns a thermally and electrically conductive adhesive material comprising a hardened adhesive, and a non-solidified filler containing a liquid metal dispersed in separate spaced regions of the adhesive. The hardened adhesive provides a mechanical bond whereas the filler provides continuous thermal and electrical metal bridges, each bridge extending through the adhesive and contacting the bonded surfaces. The method includes dispersing a filler containing a liquid metal into an unhardened adhesive, contacting the unhardened adhesive and the filler in non-solidified state to the surfaces resulting in separate spaced regions of the non-solidified filler contacting both surfaces, and lastly hardening the adhesive. In an example this system is used with UV curable adhesive.

### Object

It is an object of the present invention to provide a polymer composition, such as an adhesive polymer composition, that is UV curable and that is able to produce electrically conductive layers.

It is a further object of the invention that the polymer composition is also able to produce thermally conductive layers.

It is also an object of the present invention to provide a polymer composition which is curable with UV light to provide an anisotropic electrically conductive layer and which, when stored in a manner in which exposure to UV light is prevented, exhibits excellent shelf life.

It is an object derived from said first object to provide a method for producing a composition for storage and subsequent use.

It is a further object to provide the aforesaid method and adhesive composition with inexpensive means for industrial scale applications.

### The present invention

According to a first aspect the invention concerns methods for establishing an anisotropic electrically conductive layer as defined by claim 1.

Preferred embodiments of the invention are disclosed by the dependent claims.

While it is essential to store polymer compositions which are not immediately used in a container or receptacle in which exposure to UV light is prevented, it is preferred that it is stored in a manner in which exposure to any light is prevented and in a manner in which contact with oxygen is also suppressed.

The subsequent step of making the layer, which may be in the form of a glue joint, a film, coating or free standing mat or film product, may take place weeks or months later than the production of the composition. If it is desired to obtain a product in which the conductive strings of particles (pathways) are mainly mutually parallel, an AC electric field should be applied to align the particles.

It is however worth noticing that for achieving the benefits of the polymer composition according to the present invention optimally, a number of parameters should be taken into consideration and controlled as described below.

The conductive particles are typically infusible conductive particles such as carbon particles, metal or metal coated particles, or metal oxide particles. The conductive particles show low molecular or particle anisotropy and thus the major part of the conductive particles have low aspect ratios; i.e. aspect ratio ranges of 1-5, 1-10 or 1-20 are typical. The terms "low molecular or particle anisotropy" and "low aspect ratio" have the same meaning herein. This is the case with spherical carbon black or disk-like or conical carbon particles or graphitic particles. The conductive particles can be a mixture of different carbon particles. Also other conductive particles can be used, like metal, such as silver or metal oxide particles or colloidal metal particles. The particles are added to the polymer in the form of a non-aqueous dispersion since significant amounts of water tend to have a negative influence.

According to the present invention the particles are added as predominantly non-aqueous dispersion since the aqueous dispersion can experience hydrolysis under electric field (H2O->H+ + OH-) if the field is too high. Also, hydrolysis is avoided if the water content is relatively small. This level would typically correspond at least to the impurity levels in typical organic solvents or polymer materials. It can even correspond to the water levels in azeotropic mixtures of alcohols and water. For example ethanol contains more than 11 mol-% water."

The flowable polymer composition may have inherent adhesive properties and can be based on a broad range of polymers comprising one or several polymer components and additives commonly used therewith. In particular, it can be a thermoset polymer system which is solidified by cross-linking reactions. The polymer can also be a thermoplastic polymer system or a lyotropic polymer system. It can also be any compatible combination of such polymers.

UV curing polymers generally have desirable properties in the form of rapid curing time and strong bond strength. They can cure in as short time as a second or a few seconds and many formulations can bond dissimilar materials and withstand harsh temperatures. These qualities make UV curing polymers important in the manufacturing of items in many industrial markets such as electronics, telecommunications, medical, aerospace, glass, and optical. Unlike traditional adhesives, UV light curing polymers and polymer adhesives not only bond materials together but they can also be used to seal and coat products.

When exposed to the correct energy and irradiance in the required band of UV light, polymerization occurs, and so the polymer compositions harden or cure. The types of UV sources for UV curing include UV lamps, UV LEDs and Excimer Flash lamps.

Laminates can be built up with successively applied UV cured layers. This obviates the need for adhesive or primer layers. Thin layers can be formed in very short time, in the range of one second. There are a wide variety of UV curable vinyl monomers, particularly acrylics, with a wide variety of properties that can be combined by means of copolymers or laminates. For example strong acrylics can be combined with the fracture resistant acrylates. Acrylics could be combined with intermediate layers of cross-linked elastomers for maximizing tear strength while retaining surface hardness. Certain fluoracrylates are hard, and antireflective. They have higher specular transmission than a commonly used fluoropolymer, because fluoroacrylates can be completely amorphous and have no scattering centers. Epoxy resins have tightly linked adhesive polymer structures and can be used in surface adhesives and coatings. Such epoxy resins forms cross-linked polymer structures that have strong adhesion and low shrinkage.

There are many systems available for UV curing an adhesive, coating or film. The Dymax Heavy-Duty UV curing Widecure ^{™} Conveyor Systems is an example of a system mounted on a conveyor belt. Dymax BlueWave LED Prime UVA used LED light and thus use less effect and have constant high intensity.

A highly desirable characteristic when using the object of present invention is that conductive paths can be formed of predominantly low aspect ratio particles like carbon black,carbon nanocones and/ or graphene and the formation can take place at low electric field strengths. This simplifies the production equipment and enables both larger surfaces and thicker films to be produced. The carbon black and carbon nanocones and graphitic particles are considerably less expensive than the carbon nanotubes and can be produced in sufficient quantities by industrial methods. Moreover, it is more difficult to form uniform dispersions with carbon nanotubes.

Another highly desirable characteristic of the present invention is that a comparably low concentration of conductive particles may be used. For conductive mixtures a percolation threshold is defined as the lowest concentration of conductive particles necessary to achieve long-range conductivity in the random system. With the polymer composition according to the present invention the concentration of conductive particles required for achieving conductivity in a predefined direction is not determined by the percolation threshold and can be much lower. For practical reasons the concentration of particles is determined by the requirements on the conductive paths desired to build when using the polymer composition, there usually being no reason to have excess amounts of conductive particles not arranged into the conductive paths. The concentration of conductive particles in the polymer composition can be up to 10 times lower than the percolation threshold or even lower. Concentrations of conductive particles is typically in the range of 0.2-10 % by volume or 0.2 - 2 or 0.2-1.5 % by volume. It could even be less than 0.2 % in some embodiments, e.g. 0.1 % by volume.

Such a low particle concentration has several advantages. The tendency of particle segregation in the dispersion is reduced and the shelf life thereby correspondingly increased, the cost of the components is reduced, the mechanical strength of the subsequently formed anisotropic conductive film is increased and the optical transparency is increased thereby enhancing the sensivity to UV light, allowing a more rapid and less power consuming curing process. The increased transparency may also be seen to improve the aestetic properties of the cured products and gives mechanical and optical properties closer to that of polymers without conductive particles.

The subsequent use of the object of the present invention includes but is not limited to: electrostatic discharge (ESD) devices, conductive glue and adhesives for use in solar panels and electronics or to suppress electromagnetic interference (EMI). Also possible is to apply material on cellulose based paper that would not allow thermal curing.

The aspect ratio as discussed herein is defined as the ratio beween the largest linear dimension of a particle and the largest dimension perpendicular to said largest dimension.

"Low aspect ratio" as used herein refers to an aspect ratio less than 20, more preferably less than 10 and even more preferably less than 5.

The conductive particles are chosen among the groups comprising metal particles, metal coated particles, metal oxide particles and carbon particles as well as any combination of particles from two or more of said groups.

The composition according to the present invention may be used as glue, i.e. to glue two objects together as well as establish an anisotropic electrically conductive layer on top of a single surface (substrate).

Alternatively, the composition according to the present invention may be used to establish an anisotropic thermally conductive layer. An adequate use for such thermal conductive layers may be to dissipate heat from certain electronic components, e.g. within a computer.

The method and composition can also be used to produce a free-standing polymer film.

In a preferred embodiment the aspect ratio for a majority (more than 50 %) of the conductive particles is in the range below 5, the aspect ratio for at least 75 % of the conductive particles is below 10, and the aspect ratio for at least 90 % of the conductive particles is below 20.

## Claims

1. Method for establishing an anisotropic electrically conductive and optionally thermally conductive layer, comprising:
providing a polymer composition, wherein the providing the polymer composition comprises the steps of:
providing a non-conductive matrix of a flowable polymer composition having inherent photocurability,
adding to said matrix conductive particles selected from the group consisting of metal particles, metal coated particles, metal oxide particles and carbon particles and any combination thereof, having an aspect ratio less than 20 in an amount sufficiently low to allow the concentration of the conductive particles to be maintained at a level lower than the percolation threshold of isotropic mixture and within the range 0.1-10 vol-%,
adding the conductive particles as a predominantly non-aqueous dispersion, and
placing the thus formed polymer composition in a receptacle in which exposure to UV light is prevented;
applying a layer of the polymer composition to a substrate;
**characterised by** applying an electric field across the polymer composition in a direction determined by the direction of intended electric conductivity, to thereby align the conductive particles into assemblies to form anisotropic electric pathways, and
allowing the composition to cure under influence by UV light to provide a film and to preserve the electric conductive pathways.

2. Method as claimed in claim 1, wherein the aspect ratio for a majority of the conductive particles is in the range below 5, that the aspect ratio for at least 75 % of the particles is in the range below 10, and that the aspect ratio for at least 90 % of the conductive particles is in the range below 20.

3. Method as claimed in claim 1, wherein the polymer matrix is adhesive in nature.

4. Method as claimed in claim 1, wherein the conductive particles being present in the non-conductive matrix in a concentration in the range 0.1-2 % by volume.

5. Method as claimed in claim 1, wherein the conductive particles being present in the non-conductive matrix in a concentration in the range 0.1-1.5 % by volume.

6. Method as claimed in claim 1, wherein the conductive particles are added as a non-aqueous dispersion.

7. Method as claimed in claim 1, wherein the carbon particles comprises particles of carbon black or carbon nanocones or graphitic particles or graphene or any combination thereof.

8. Method as claimed in claim 1, further comprising placing a second substrate on top of said layer.

9. Method as claimed in claim 1, wherein the polymer composition is non-adhesive and that the film formed is a free-standing film.

10. Method as claimed in claim 1, wherein the polymer composition is adhesive and permanent adhesion is formed between the substrate and the film while preserving the electric conductive pathways in the film.

11. Method according to any one of claims 1 to 10, wherein an AC field is applied to obtain mainly mutually parallel electric conductive pathways.

## Patentansprüche

1. Verfahren zum Herstellen einer anisotropen elektrisch leitfähigen und optional thermisch leitfähigen Schicht, umfassend:
Bereitstellen einer Polymerzusammensetzung, wobei das Bereitstellen der Polymerzusammensetzung die folgenden Schritte umfasst:
Bereitstellen einer nicht-leitfähigen Matrix aus einer fließfähigen Polymerzusammensetzung, die inhärente Lichthärtbarkeit aufweist,
Hinzufügen von leitfähigen Partikeln zu der Matrix, ausgewählt aus der Gruppe bestehend aus Metallpartikeln, metallbeschichteten Partikeln, Metalloxidpartikeln und Kohlenstoffpartikeln und einer beliebigen Kombination davon, die ein Aspektverhältnis von weniger als 20 aufweisen, in einer Menge, die ausreichend niedrig ist, um die Konzentration der leitfähigen Partikel auf einem Niveau unterhalb der Perkolationsschwelle der isotropen Mischung und innerhalb des Bereichs von 0,1-10 Vol.-% zu halten,
Hinzufügen der leitfähigen Partikel als eine überwiegend nicht-wässrige Dispersion, und
Platzieren der so gebildeten Polymerzusammensetzung in einem Behälter, in der eine Exposition gegenüber UV-Licht verhindert wird;
Aufbringen einer Schicht der Polymerzusammensetzung auf ein Substrat;
**gekennzeichnet durch** Anlegen eines elektrischen Felds über die Polymerzusammensetzung in einer Richtung, die durch die Richtung einer beabsichtigten elektrischen Leitfähigkeit bestimmt wird, um dadurch die leitfähigen Partikel in Anordnungen anzuordnen, um anisotrope elektrische Leitbahnen zu bilden, und
Gestatten, dass die Zusammensetzung unter dem Einfluss von UV-Licht aushärtet, um einen Film zu bilden und die elektrischen leitfähigen Leitbahnen zu erhalten.

2. Verfahren nach Anspruch 1, wobei das Aspektverhältnis für eine Mehrheit der leitfähigen Partikel in dem Bereich unter 5 liegt, das Aspektverhältnis für mindestens 75 % der Partikel in dem Bereich unter 10 liegt und das Aspektverhältnis für mindestens 90 % der leitfähigen Partikel in dem Bereich unter 20 liegt.

3. Verfahren nach Anspruch 1, wobei die Polymermatrix selbsthaftend beschaffen ist.

4. Verfahren nach Anspruch 1, wobei die leitfähigen Partikel in der nicht-leitfähigen Matrix in einer Konzentration in dem Bereich von 0,1-2 Vol-% vorhanden sind.

5. Verfahren nach Anspruch 1, wobei die leitfähigen Partikel in der nicht-leitfähigen Matrix in einer Konzentration in dem Bereich von 0,1-1,5 Vol.-% vorhanden sind.

6. Verfahren nach Anspruch 1, wobei die leitfähigen Partikel als eine nicht-wässrige Dispersion hinzugefügt werden.

7. Verfahren nach Anspruch 1, wobei die Kohlenstoffpartikel Partikel aus Ruß oder Kohlenstoffnanokegeln oder Graphitpartikel oder Graphen oder eine beliebige Kombination davon umfassen.

8. Verfahren nach Anspruch 1, das weiter Platzieren eines zweiten Substrats auf der Oberseite der Schicht umfasst.

9. Verfahren nach Anspruch 1, wobei die Polymerzusammensetzung nicht-haftend ist und der gebildete Film ein freistehender Film ist.

10. Verfahren nach Anspruch 1, wobei die Polymerzusammensetzung selbsthaftend ist und eine dauerhafte Haftung zwischen dem Substrat und dem Film gebildet wird, während die elektrischen leitfähigen Leitbahnen in dem Film erhalten bleiben.

11. Verfahren nach einem der Ansprüche 1 bis 10, wobei ein Wechselfeld angelegt wird, um im Wesentlichen parallele, elektrische leitfähige Leitbahnen zu erhalten.

## Revendications

1. Procédé d'établissement d'une couche anisotrope électriquement conductrice et éventuellement thermiquement conductrice, comprenant les étapes consistant à :
fournir une composition polymère, dans laquelle la fourniture de la composition polymère comprend les étapes consistant à :
fournir une matrice non conductrice d'une composition polymère fluide présentant un photodurcissement inhérent,
ajouter à ladite matrice des particules conductrices choisies dans le groupe consistant en des particules métalliques, des particules revêtues de métal, des particules d'oxyde métallique et des particules de carbone et toute combinaison de celles-ci, présentant un rapport d'aspect inférieur à 20 en une quantité suffisamment faible pour permettre de maintenir la concentration des particules conductrices à un niveau inférieur au seuil de percolation du mélange isotrope et dans la plage de 0,1 à 10 % en vol.,
ajouter les particules conductrices sous forme de dispersion essentiellement non aqueuse, et
placer la composition polymère ainsi formée dans un récipient dans lequel l'exposition à la lumière UV est évitée ;
appliquer une couche de la composition polymère sur un substrat ;
**caractérisé par** l'application d'un champ électrique à travers la composition polymère dans une direction déterminée par la direction de la conductivité électrique prévue, pour ainsi aligner les particules conductrices en assemblages pour former des voies électriques anisotropes, et
laisser la composition durcir sous l'influence de la lumière UV pour fournir un film et préserver les voies conductrices électriques.

2. Procédé selon la revendication 1, dans lequel le rapport d'aspect pour une majorité des particules conductrices est dans la plage inférieure à 5, le rapport d'aspect pour au moins 75 % des particules est dans la gamme inférieure à 10, et le rapport d'aspect pour au moins 90 % des particules conductrices est dans la gamme inférieure à 20.

3. Procédé selon la revendication 1, dans lequel la matrice polymère est de nature adhésive.

4. Procédé selon la revendication 1, dans lequel les particules conductrices sont présentes dans la matrice non conductrice dans une concentration comprise entre 0,1 et 2 % en volume.

5. Procédé selon la revendication 1, dans lequel les particules conductrices sont présentes dans la matrice non conductrice dans une concentration comprise entre 0,1 et 1,5 % en volume.

6. Procédé selon la revendication 1, dans lequel les particules conductrices sont ajoutées sous forme de dispersion non aqueuse.

7. Procédé selon la revendication 1, dans lequel les particules de carbone comprennent des particules de noir de carbone ou des nanocônes de carbone ou des particules graphitiques ou du graphène ou toute combinaison de ceux-ci.

8. Procédé selon la revendication 1, comprenant en outre le placement d'un second substrat au-dessus de ladite couche.

9. Procédé selon la revendication 1, dans lequel la composition polymère est non adhésive et le film formé est un film autoportant.

10. Procédé selon la revendication 1, dans lequel la composition polymère est adhésive et une adhérence permanente est formée entre le substrat et le film tout en préservant les voies conductrices électriques dans le film.

11. Procédé selon l'une quelconque des revendications 1 à 10, dans lequel un champ alternatif est appliqué pour obtenir des voies conductrices électriques principalement mutuellement parallèles.
